(19) Europäisches Patentamt
European Patent Office
Office européen des brevets

(11) **EP 4 492 293 A1**

(12) **EUROPEAN PATENT APPLICATION**

(43) Date of publication:
**15.01.2025 Bulletin 2025/03**

(21) Application number: **24178414.9**

(22) Date of filing: **28.05.2024**

(51) International Patent Classification (IPC):
*G06N 5/01* $^{(2023.01)}$   *G06N 3/126* $^{(2023.01)}$
*G06N 10/60* $^{(2022.01)}$

(52) Cooperative Patent Classification (CPC):
**G06N 5/01; G06N 3/126;** G06N 10/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023  JP 2023114576**

(71) Applicant: **FUJITSU LIMITED**
**Kawasaki-shi, Kanagawa 211-8588 (JP)**

(72) Inventor: **MARUO, Akito**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPERATION PROGRAM, OPERATION METHOD, AND INFORMATION PROCESSING APPARATUS**

(57)   An operation program causes a computer to execute a process of, in a case where an operation processing is repeatedly executed which includes creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data, expressing each piece of learning data of the learning data group as an objective variable obtained by a linear weighted sum of a plurality of objective functions, and changing a weight of the linear weighted sum every time the operation processing is executed.

## FIG. 5

```
          START
            │
┌──────────────────────────────────┐
│      GENERATE INITIAL POINTS       │── S11
└──────────────────────────────────┘
            │
┌──────────────────────────────────┐
│ EVALUATE INITIAL POINT BY USING SOLVER │── S12
└──────────────────────────────────┘
            │
┌──────────────────────────────────┐
│ GENERATE DA RECOMMENDED POINT AND GA │── S13
│         RECOMMENDED POINT          │
└──────────────────────────────────┘
            │
┌──────────────────────────────────┐
│ EVALUATE RECOMMENDED POINT BY USING │── S14
│              SOLVER                │
└──────────────────────────────────┘
            │
┌──────────────────────────────────┐
│  ADD EVALUATION RESULT TO LEARNING DATA │── S15
└──────────────────────────────────┘
            │
      ┌─────────────────────────────┐
NO ───│ HAS NUMBER OF TIMES OF ITERATION │── S16
      │    REACHED UPPER LIMIT?      │
      └─────────────────────────────┘
            │ YES
          END
```

EP 4 492 293 A1

**Description**

FIELD

The embodiment discussed herein is related to an operation program, an operation method, and an information processing apparatus.

BACKGROUND

A technique has been disclosed in which optimization is performed by performing sampling of binary variables.
Japanese Laid-open Patent Publication No. 2022-190752, Japanese Laid-open Patent Publication No. 2021-33544, and Japanese Laid-open Patent Publication No. 2022-45870 are disclosed as related art.

SUMMARY

PROBLEMS

For example, since a sampling technique using an Ising model in a quadratic unconstrained binary optimization (QUBO) format is a method of sequentially sampling recommended points on a model, there is a possibility that a sampling region is limited. Therefore, as a result, there is a possibility that the number of times of sampling increases.
In one aspect, an object of the present disclosure is to provide an operation program, an operation method, and an information processing apparatus that may reduce the number of times of sampling.
According to an aspect of the embodiments, an operation program causes a computer to execute a process of, in a case where an operation processing is repeatedly executed which includes creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data, expressing each piece of learning data of the learning data group as an objective variable obtained by a linear weighted sum of a plurality of objective functions, and changing a weight of the linear weighted sum every time the operation processing is executed.

[Effects of Invention]

The number of times of sampling may be reduced.

BRIEF DESCRIPTION OF DRAWINGS

FIG. 1 is a diagram exemplifying a search for a solution in a QUBO format;
FIG. 2 is a diagram illustrating evaluation values for movies watched by many users;
FIG. 3 is a flowchart illustrating an execution procedure in a sampling technique using a model in the QUBO format;
FIG. 4A is a block diagram exemplifying an overall configuration of an information processing apparatus, and FIG. 4B is a block diagram exemplifying a hardware configuration of the information processing apparatus;
FIG. 5 is a flowchart illustrating an example of the operation of the information processing apparatus;
FIG. 6 is a flowchart illustrating details of step S11;
FIG. 7 is a diagram exemplifying matrix X;
FIG. 8 is a flowchart illustrating details of step S13;
FIGs. 9A and 9B are diagrams exemplifying NSGAII;
FIG. 10A is a diagram exemplifying crossover, and FIG. 10B is a diagram exemplifying mutation;
FIG. 11A is a diagram exemplifying an optimization problem of magnetic shield, FIG. 11B is a diagram exemplifying the arrangement of Gaussian basis functions, and FIG. 11C is a diagram exemplifying magnetic flux lines generated from a coil;
FIG. 12 is a diagram exemplifying positive arrangement and negative arrangement;
FIG. 13 is a diagram illustrating the distribution of shape function y;
FIG. 14 is a diagram illustrating a simulation result; and
FIG. 15 is a diagram for describing hyper volume (HV).

DESCRIPTION OF EMBODIMENTS

As a technique of searching for a good solution with a high evaluation value from a large number of combinations, order, or the like, a sampling technique of binary variables is used. As the sampling technique of binary variables, there are a sampling technique of randomly performing sampling, a sampling technique using an Ising model in the QUBO format, and the like.

The sampling technique of randomly performing sampling may easily perform sampling, but has a disadvantage that sampling efficiency is poor and the number of times of sampling increases in order to obtain a good solution with high accuracy.

For example, as the sampling technique using a model in the QUBO format, there are factorization machine with quantum annealing (FMQA) and the like. FMQA is a method in which quantum annealing (QA) and factorization machine (FM) (machine learning method) are combined. In the method of FMQA, an FM model in the QUBO format is created from learning data, a good solution is obtained by QA, an evaluation value of the good solution is analyzed by a solver, a result is added to the learning data, and sampling is performed interactively. Further, as the sampling technique using a model in the QUBO format, there is an FMDA technique. FMDA is obtained by replacing the QA portion of FMQA with a digital annealer (DA).

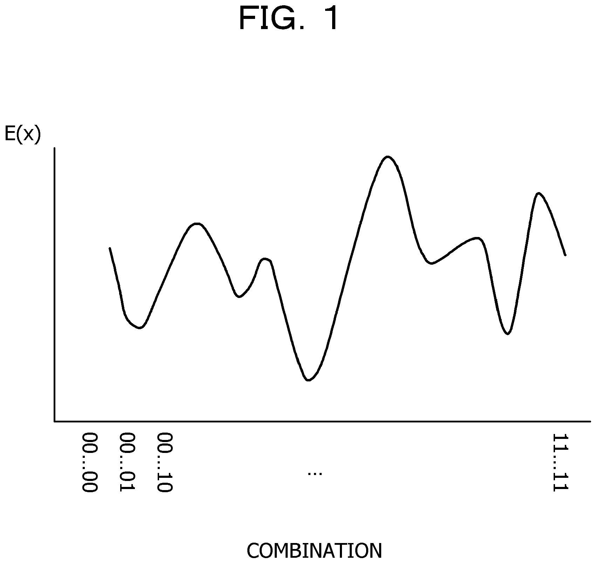

The QUBO format is quadratic unconstrained binary optimization, and is a format that is free from a quadratic constraint and enables binary optimization. For example, the QUBO format may be expressed as in the following formula. $x_i = 0$ or $1$ $(i = 1, ..., N)$. $W_{ij}$ is a coupling coefficient between $x_i$ and $x_j$. $b_i$ is a bias coefficient of $x_i$. The first term on the right side is a quadratic term and represents interaction. The second term on the right side is a linear term and represents a bias effect. The third term on the right side is a constant term. In the QUBO format, as exemplified in FIG. 1, good solution x for minimizing $E(x)$ representing energy is searched for in accordance with the following formula.

$$E(\boldsymbol{x}) = -\sum_{i,j} W_{ij} x_i x_j - \sum_i b_i x_i + \text{const.}$$

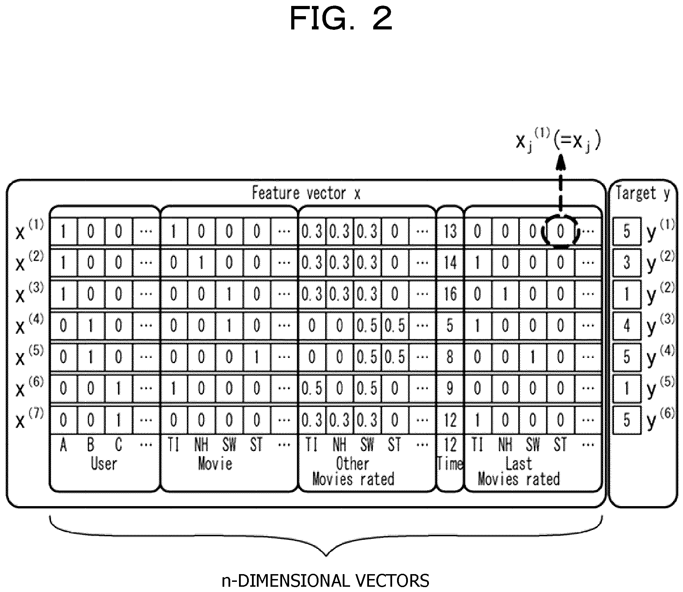

As an example of the sampling technique using a model in the QUBO format, an overview of FMDA will be described. FIG. 2 illustrates evaluation values for movies watched by many users. These evaluation values are n-dimensional vectors. First, a model in the QUBO format for representing interaction is created from these evaluation values. A model in the QUBO format may be expressed as in the following formula.

$$\hat{y}(\boldsymbol{x}^{(k)}) := w_0 + \sum_{i=1}^n w_i x_i^{(k)} + \sum_{i=1}^n \sum_{j=i+1}^n \langle \boldsymbol{v}_i, \boldsymbol{v}_j \rangle x_i^{(k)} x_j^{(k)}$$

In the above formula, $w_0$, $w_i$, $v_i$, and $v_j$ are coefficients to be learned. This machine learning model is a model that is strong against a sparse data set. Since this model is in the QUBO format, a model in the QUBO format may be automatically generated by learning FM.

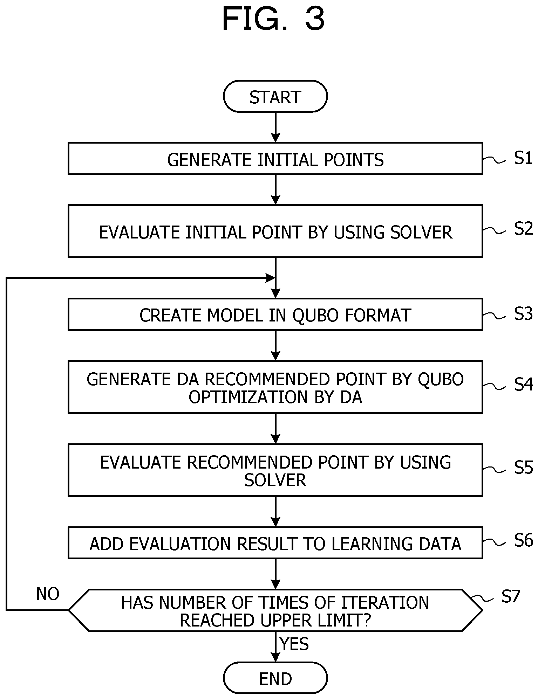

FIG. 3 is a flowchart illustrating an execution procedure in the sampling technique using a model in the QUBO format. As exemplified in FIG. 3, first, a learning data group is generated by randomly generating pieces of learning data (initial points) (step S1). The number of pieces of learning data to be generated is determined by the setting of a user.

Next, an evaluation value of an initial point is calculated by using a solver (step S2). An evaluation value is an indicator for determining whether an initial point or a recommended point to be described later is good. By the above-described steps, an initial learning data group in which an initial point and an evaluation value form a set is generated.

Next, a model in the QUBO format is created by generating FM from the learning data group (step S3). Since FM is in the QUBO format, generation of FM is equivalent to generation of a model in the QUBO format. Any other machine learning model may be used as long as a model in the QUBO format may be generated.

Next, optimization of the created model in the QUBO format is performed by using DA, and a good solution with the best evaluation value (DA recommended point) is generated (step S4).

Next, an evaluation value of the DA recommended point is calculated by using the solver (step S5).

Next, an evaluation result (a recommended point and evaluation value set) is added to the learning data group as learning data (step S6).

Next, it is determined whether the number of times of iteration has reached an upper limit (step S7). When "No" is determined in step S7, the processing is executed again from step S3. Accordingly, step S3 to step S6 are repeated until an end condition is satisfied. When "Yes" is determined in step S7, the execution of the flowchart ends. As the end condition, a condition such as a case where an amount of change in objective function is less than a threshold for a certain period of time may be used.

By the above-described procedure, the learning data group is updated, and an optimal solution may be obtained.

Although FMDA has been described in FIG. 3, the DA portion of FMDA may be replaced with QA, and any other method may be used as long as it is an Ising machine capable of solving QUBO. Besides using an Ising machine dedicated for solving QUBO, an Ising model may be solved by using software.

Since the sampling technique using a model in the QUBO format is a method of sequentially sampling recommended points on the model, there is a possibility that a sampling region may be limited. In the sampling technique using a model in the QUBO format, sampling performance depends on a learning data group for model generation. Since FM is a quadratic model, there is a possibility that a problem may not be fully expressed. In a case where a plurality of recommendation methods is used, it is difficult to adjust the number of recommendations. From the above, the number of times of sampling increases in order to increase the accuracy of searching for an optimal solution.

Accordingly, in the following embodiment, an example in which the number of times of sampling may be reduced will be described.

[First Embodiment]

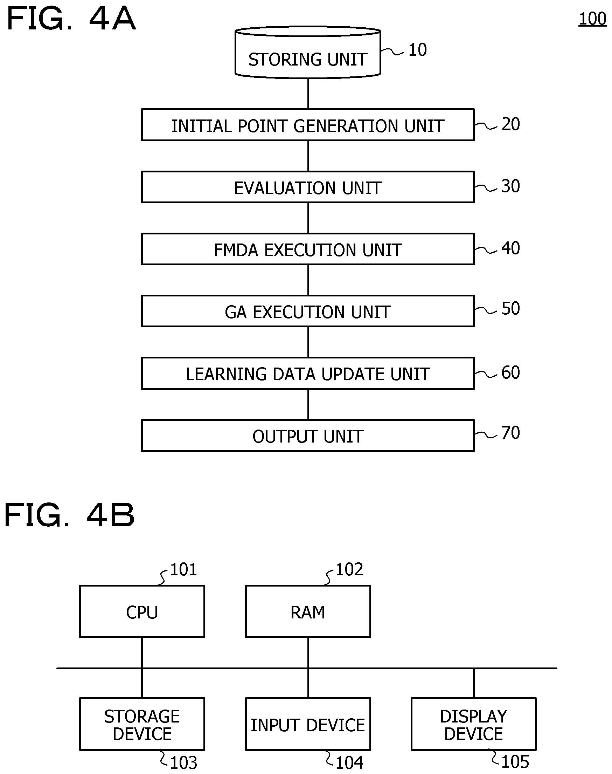

FIG. 4A is a block diagram exemplifying an overall configuration of an information processing apparatus 100. As exemplified in FIG. 4A, the information processing apparatus 100 includes a storing unit 10, an initial point generation unit 20, an evaluation unit 30, an FMDA execution unit 40, a GA execution unit 50, a learning data update unit 60, an output unit 70, and the like.

FIG. 4B is a block diagram exemplifying a hardware configuration of the information processing apparatus 100. As exemplified in FIG. 4B, the information processing apparatus 100 includes a central processing unit (CPU) 101, a random-access memory (RAM) 102, a storage device 103, an input device 104, a display device 105, and the like.

The CPU 101 is a central processing unit. The CPU 101 includes one or more cores. The RAM 102 is a volatile memory that temporarily stores a program executed by the CPU 101, data processed by the CPU 101, and the like. The storage device 103 is a nonvolatile storage device. As the storage device 103, for example, a read-only memory (ROM), a solid-state drive (SSD) such as a flash memory, a hard disk to be driven by a hard disk drive, or the like may be used. The storage device 103 stores an operation program. The input device 104 is an input device such as a keyboard or a mouse. The display device 105 is a display device such as a liquid crystal display (LCD). By the CPU 101 executing the operation program, the storing unit 10, the initial point generation unit 20, the evaluation unit 30, the FMDA execution unit 40, the GA execution unit 50, the learning data update unit 60, the output unit 70, and the like are realized. Hardware such as dedicated circuits may be used as the storing unit 10, the initial point generation unit 20, the evaluation unit 30, the FMDA execution unit 40, the GA execution unit 50, the learning data update unit 60, the output unit 70, and the like.

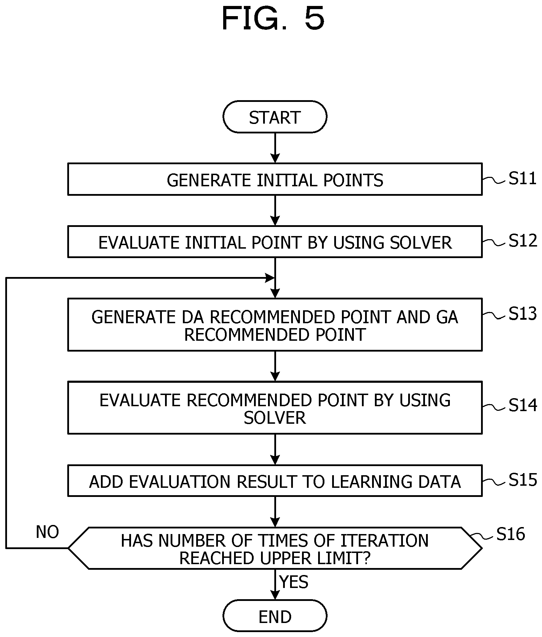

FIG. 5 is a flowchart illustrating an example of the operation of the information processing apparatus 100. As exemplified in FIG. 5, the initial point generation unit 20 generates a learning data group by generating initial points of learning data (step S11). The number of pieces of learning data to be generated is determined by the setting of a user. In the present embodiment, initial points are generated widely in an analysis space. For example, a D-optimal design is used. A D-optimal design is a design that enables an effect to be estimated most efficiently for a certain number of times of trial and a specified model. For example, it is a design that is generated by an iterative search algorithm and minimizes the covariance of the parameter estimates for a specified model.

Next, the evaluation unit 30 calculates an evaluation value of an initial point by using a solver (step S12). An initial learning data group in which the initial point obtained in step S11 and the evaluation value calculated in step S12 form a set is stored in the storing unit 10.

Next, the FMDA execution unit 40 generates a DA recommended point, and the GA execution unit 50 generates a GA recommended point (step S13).

Next, the evaluation unit 30 calculates an evaluation value of the recommended point generated in step S13 by using the solver (step S14).

Next, the learning data update unit 60 adds an evaluation result (a recommended point and evaluation value set) to the learning data group as learning data (step S15).

Next, the FMDA execution unit 40 determines whether the number of times of iteration has reached an upper limit (step S16). The number of times of execution of step S16 may be set as the number of times of iteration. An upper limit number of the number of times of iteration is set in advance by a user.

When "No" is determined in step S16, the processing is executed again from step S13. When "Yes" is determined in step S16, the execution of the flowchart ends.

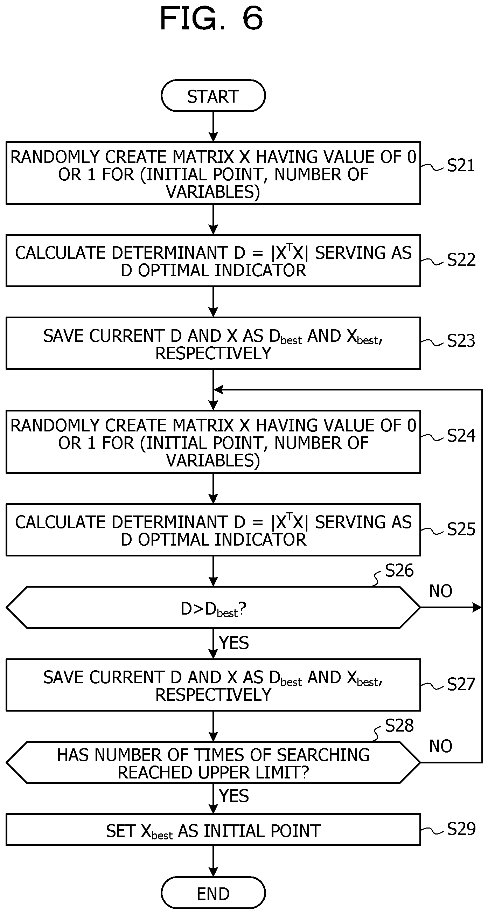

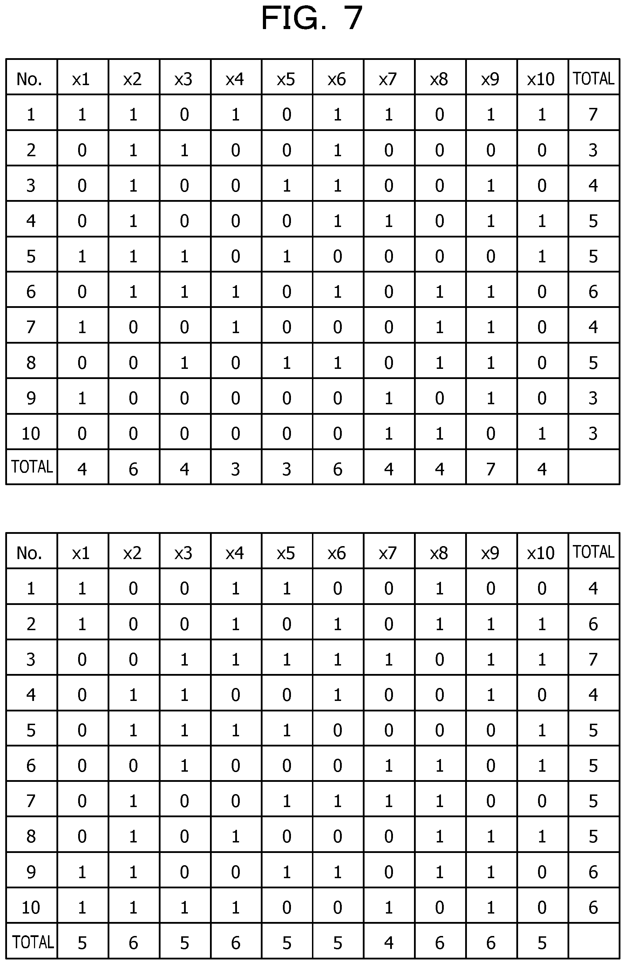

FIG. 6 is a flowchart illustrating details of step S11 in FIG. 5. The initial point generation unit 20 randomly creates matrix X having the value of 0 or 1 for (initial point, number of variables) (step S21). As an example, the upper part of FIG. 7 is a diagram exemplifying matrix X that is randomly created when (initial point, number of variables) = (10, 10).

Next, the initial point generation unit 20 calculates determinant $D = |X^T X|$ serving as a D optimal indicator by using the result of step S21 (step S22). $X^T$ is a transposed matrix of matrix X.

Next, the initial point generation unit 20 saves the current D and X as $D_{best}$ and $X_{best}$, respectively (step S23). In this flowchart, X created in step S21 is saved as $X_{best}$, and D created in step S22 is saved as $D_{best}$.

Next, the initial point generation unit 20 newly and randomly creates matrix X having the value of 0 or 1 for the same (initial point, number of variables) as that in step S21 (step S24).

Next, the initial point generation unit 20 calculates determinant $D = |X^T X|$ serving as a D optimal indicator by using the result of step S24 (step S25).

Next, the initial point generation unit 20 determines whether $D > D_{best}$ (step S26). When "No" is determined in step S26, the processing is executed again from step S24.

When "Yes" is determined in step S26, the initial point generation unit 20 saves the current D and X as $D_{best}$ and $X_{best}$, respectively (step S27). In this flowchart, X finally created in step S24 is saved as $X_{best}$, and D finally created in step S25 is saved as $D_{best}$.

Next, the initial point generation unit 20 determines whether the number of times of searching has reached an upper limit (step S28). As the number of times of searching, the number of times of execution of step S28 or the like may be used. For example, the number of times of searching is 10000 or the like. When "No" is determined in step S28, the processing is executed again from step S24.

When "Yes" is determined in step S28, the initial point generation unit 20 sets the current $X_{best}$ as the initial point (step S29). After that, the execution of the flowchart ends.

By executing the processing of FIG. 6, matrix X is searched for such that determinant $D = |X^T X|$ increases. Therefore, when the processing of FIG. 6 ends, matrix X with a large D is obtained. This means that initial points are generated in a wide range in an analysis space.

In matrix X of the upper part of FIG. 7, the average of the totals of the rows is 4.50, and the deviation of the totals is 1.28. The average of the totals of the columns is 4.50, and the deviation of the totals is 1.28. It may be seen that there is variation in generation of bits in trials (rows) and variables (columns), and the distribution is biased. The value of determinant D is 36.

The lower part of FIG. 7 is matrix X obtained by executing the processing of FIG. 6. In matrix X of the lower part of FIG. 7, the average of the totals of the rows is 5.30, and the deviation of the totals is 0.90. The average of the totals of the columns is 5.30, and the deviation of the totals is 0.64. The value of determinant D is 2916. In matrix X of the lower part of FIG. 7, it may be seen that, with a larger value of determinant D, variation in generation of bits is small in trials (rows) and variables (columns), and sampling may be widely performed.

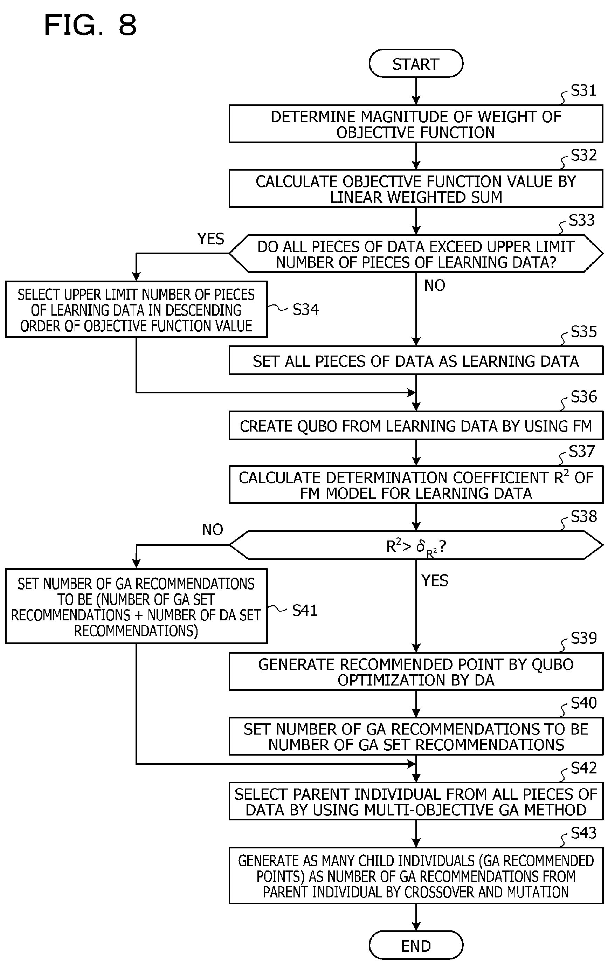

FIG. 8 is a flowchart illustrating details of step S13 in FIG. 5. As exemplified in FIG. 8, the FMDA execution unit 40 determines the magnitude of a weight of an objective function (step S31). A determination method of a weight is random or the like for each time of iteration. Therefore, a weight is changed every time step S31 is executed.

Next, the FMDA execution unit 40 calculates an objective function value by a linear weighted sum (step S32). In this flowchart, the FMDA execution unit 40 adds a plurality of objective functions by a linear weighted sum, and converts the plurality of objective functions into one objective function. For example, when first objective function $F_1 = y_1$ and second objective function $F_2 = y_2$, post-conversion objective function $E = \alpha F_1 + (1 - \alpha)F_2$. $\alpha$ is a weight and satisfies $0 < \alpha < 1$. Every time step S31 is iterated, the value of $\alpha$ changes. Alternatively, an interaction term may be introduced as in $E = \alpha F_1 + \beta F_2 + \gamma F_1 F_2$. In this case, $\alpha$, $\beta$, and $\gamma$ are weights, and when $\beta = (1 - \alpha)$ and $\gamma = 0$, $E = \alpha F_1 + (1 - \alpha)F_2$.

Next, the learning data update unit 60 determines whether the total number of pieces of learning data in a learning data group exceeds an upper limit number (step S33). An upper limit number of the number of pieces of learning data is set in advance by a user.

When "Yes" is determined in step S33, the learning data update unit 60 selects the upper limit number of pieces of learning data in descending order of evaluation value of objective function value by a linear weighted sum, and deletes data other than the selected learning data (step S34). Alternatively, the learning data update unit 60 may select learning data in which an evaluation value is equal to or larger than a predetermined value, and delete learning data other than the selected learning data.

When "No" is determined in step S33, the learning data update unit 60 sets all pieces of learning data as learning data (step S35).

After the execution of step S34 or step S35, the FMDA execution unit 40 generates a model in the QUBO format by generating FM based on the learning data group stored in the storing unit 10 (step S36). Since FM is in the QUBO format, generation of FM is equivalent to generation of a model in the QUBO format. Any other machine learning model may be used as long as a model in the QUBO format may be generated.

Next, the FMDA execution unit 40 calculates determination coefficient $R^2$ of the FM model for the learning data group (step S37). Determination coefficient $R^2$ is an indicator of model accuracy, and represents that, as the determination coefficient is closer to 1, the accuracy of searching for a good solution with a high evaluation value is higher. For example,

determination coefficient $R^2$ may be calculated by the following formula.

$$R^2 = 1 - \frac{\sum_{i=1}^{n}(y_i - \hat{y})^2}{\sum_{i=1}^{n}(y_i - \bar{y})^2}$$

In the formula, $y_i$ is an actual measurement value. The following formula is a prediction value.

$$\hat{y}$$

The following formula is an average value of actual measurement values.

$$\bar{y}$$

Next, the FMDA execution unit 40 determines whether determination coefficient $R^2$ exceeds threshold $\delta$ (step S38). Threshold $\delta$ is set in advance by a user. An example of threshold $\delta$ will be described. For example, threshold $\delta$ is set to be 0.8 or so when step S38 is executed for the first time. Preferably, the value of threshold $\delta$ is small when DA recommendation works effectively, and the value of threshold $\delta$ is large when DA recommendation does not work effectively. For example, whether DA recommendation works effectively may be determined depending on whether a rate of determination of "Yes" in step S38 is equal to or larger than a threshold.

When "Yes" is determined in step S38, the FMDA execution unit 40 generates as many DA recommended points as the number of DA set recommendations by QUBO optimization by DA (step S39). The number of DA set recommendations is set in advance by a user. A DA recommended point is a good solution (recommended point) with the best evaluation value. Alternatively, a DA recommended point is a good solution (recommended point) with an evaluation value equal to or larger than a threshold. Alternatively, a DA recommended point is a good solution (recommended point) with an evaluation value up to a predetermined ranking from the top.

After that, the GA execution unit 50 sets the number of GA recommendations to be the number of GA set recommendations (step S40).

When "No" is determined in step S38, the GA execution unit 50 sets the number" of GA recommendations to be (the number of GA set recommendations + the number of DA set recommendations) (step S41). The number of GA set recommendations is set in advance by a user. The number of GA recommendations does not have to be (the number of GA set recommendations + the number of DA set recommendations), and may be a number larger than the number of GA recommendations.

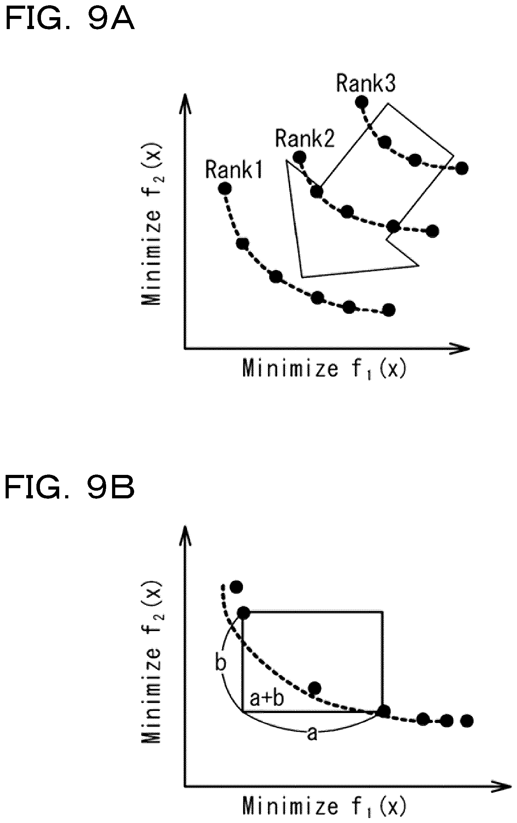

After the execution of step S40 or after the execution of step S41, the GA execution unit 50 selects, from all learning data groups stored in the storing unit 10, as many parent individuals as the number of GA recommendations by using a multi-objective GA method (step S42). The method of selecting parent individuals is not particularly limited as long as the method is a multi-objective GA method. For example, the non-dominated sorting genetic algorithm II (NSGAII) may be used. In NSGAII, individuals are selected from the viewpoint of variety based on convergence based on a non-dominated rank and a crowding distance. For example, individuals are selected in rank order (Rank $1 \rightarrow$ Rank $2 \rightarrow ...$), and are selected in ascending order of crowdedness within the same rank. For example, as exemplified in FIG. 9A, in optimization that minimizes first objective function $f_1(x)$ and second objective function $f_2(x)$, ranks are determined according to the convergence (dominated relationship) in order from a solution that is not dominated as Rank1. As exemplified in FIG. 9B, (a + b) calculated as the Manhattan distance between adjacent individuals is set as the crowding distance. Both ends are promised to be $\infty$.

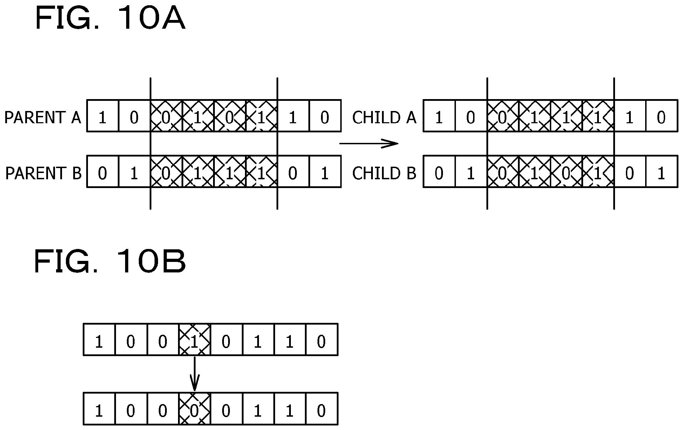

Next, the GA execution unit 50 generates as many child individuals (GA recommended points) as the number of GA recommendations from the parent individual by crossover and mutation (step S43). FIG. 10A is a diagram exemplifying crossover. For example, some genes (crossover points) of parent individual A and some genes (crossover points) of parent individual B are randomly determined and replaced with each other, and child individual A and child individual B are obtained. FIG. 10B is a diagram exemplifying mutation. For example, a randomly selected gene is replaced with an allele. A crossover probability and a mutation probability are set in advance by a user. After that, the execution of the flowchart ends.

The output unit 70 outputs a result of the processing of FIG. 5. For example, the output result is displayed by the display device 105. For example, the output unit 70 may output the contents of a learning data group and may output learning data with a high evaluation value in the learning data group as a good solution.

According to the present embodiment, the number of DA set recommendations and the number of GA set recommendations are determined according to the accuracy of an FM model generated from a learning data group. Accordingly, both high accuracy for obtaining a good solution and reduction in the number of times of sampling may be achieved.

For example, in a case where the accuracy of an FM model generated from a learning data group is low, there is a possibility that the accuracy of searching for a good solution in DA is low. Accordingly, the number of GA recommendations is increased without performing DA recommendation. By using GA, it is possible to treat learning data as a population and generate recommended points by using GA processing. Accordingly, a region in which an evaluation value is likely to be good may be sampled in a wide range. In this case, since DA recommendation with low accuracy is not performed, as a result, a good solution may be obtained with high accuracy with a small number of times of sampling.

For example, in a case where the accuracy of an FM model generated from a learning data group is high, a good solution in an FM model may be generated by DA as a recommended point. In this case, a region in which an evaluation value is high may be actively sampled. Accordingly, the number of times of sampling for obtaining a good solution may be reduced.

From the above, according to the present embodiment, both high accuracy for obtaining a good solution and reduction in the number of times of sampling may be achieved.

In the present embodiment, a plurality of objective functions is added by a linear weighted sum. At a stage where a solution search by FMDA and GA proceeds, the weight of the linear weighted sum is dynamically changed. By doing so, the plurality of objective functions may be optimized while reducing the number of times of sampling.

In step S42, as many parent individuals as the number of GA recommendations are selected from all learning data groups by using a multi-objective GA method. Accordingly, since all pieces of learning data are treated as a population, GA recommended points may be generated by using multi-objective GA processing (selection of multipurpose GA, crossover, and mutation).

By using a D-optimal design in step S11, initial points may be generated in a wide range in an analysis space. Accordingly, search omission of an optimal solution may be reduced.

The accuracy of modeling used for sampling may be improved by updating a learning data group according to the evaluation value of each piece of learning data included in the learning data group when the number of pieces of data in the learning data group exceeds an upper limit number.

(Simulation Result)

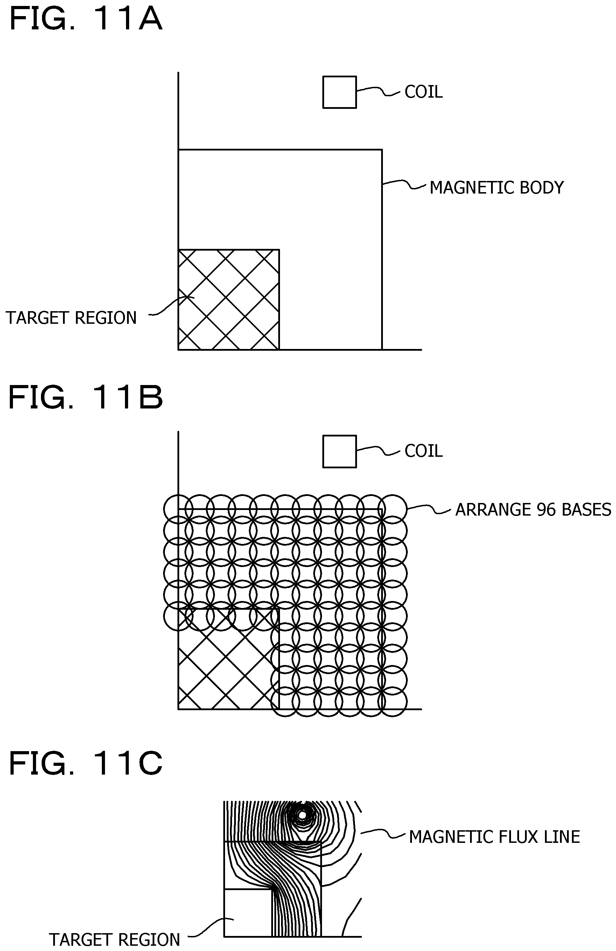

Hereinafter, description will be given for a simulation result obtained by setting a virtual problem and performing operation processing according to the above embodiment. FIG. 11A is a diagram exemplifying an optimization problem of magnetic shield. FIG. 11A is a diagram of a magnetic shield analysis model exemplifying a coil, a design region of magnetic bodies, and a target region. The target region is a region where the influence of magnetic flux is to be reduced. The design region of magnetic bodies is a region for arranging magnetic bodies. FIG. 11B is a diagram exemplifying the arrangement of Gaussian basis functions. As exemplified in FIG. 11B, 96 magnetic bodies may be arranged in the design region of magnetic bodies. FIG. 11C is a diagram exemplifying magnetic flux lines generated from a coil.

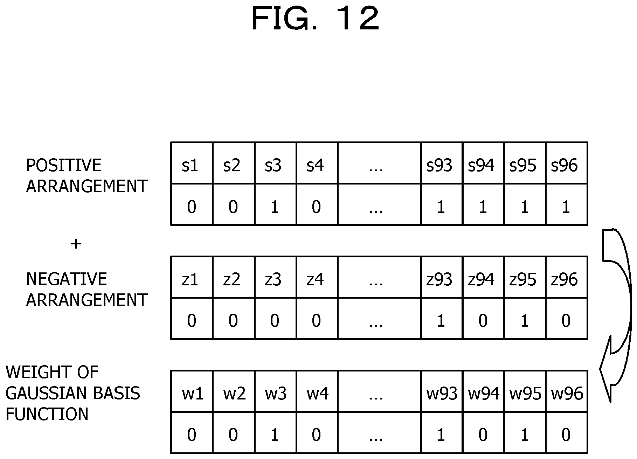

The tables in FIG. 12 are diagrams exemplifying positive arrangement and negative arrangement. s1 to s96 indicate 96 positive arrangement locations. "0" in s1 to s96 represents that a magnetic body is not arranged, and "1" represents that a magnetic body is arranged, z1 to z96 indicate 96 negative arrangement locations. "0" in z1 to z96 represents that a magnetic body is not arranged, and "1" represents that a magnetic body is arranged.

This arrangement problem may be expressed as shape function y as in the following formula. $s_i$, $z_i \in \{0, 1\}$ and $w_i \in \{-1, 0, 1\}$. In this way, an optimization problem of magnetic shield is treated as an arrangement problem of positive and negative Gaussian basis functions.

$$y(x, s, z) = \sum_{i=1}^{N_G} (s_i - z_i) \left\{ G_i(x) / \sum_{j=1}^{N_G} G_j(x) \right\}$$

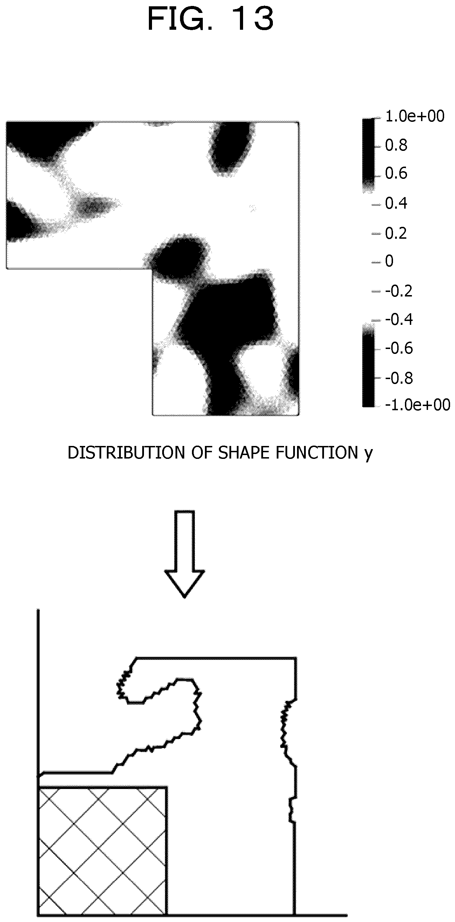

The distribution of shape function y is as illustrated in the upper diagram of FIG. 13. From this result, as illustrated in the lower diagram of FIG. 13, material information may be determined from the magnitude of shape function y. In the lower diagram of FIG. 13, when shape function y is equal to or more than 0, there is a substance, and when shape function y is less than 0, there is no substance.

An object of magnetic shield shape optimization is to minimize magnitude $B_{ave}{}^T$ of an average magnetic flux density and magnetic body area $S_{mag}$ in a target region. For example, the object is minimization of the following first objective function $F_1$ and second objective function $F_2$. Post-conversion objective function $E = \alpha F_1 + (1 - \alpha)F_2$.

$$F_1 = \frac{1}{E_1} B_{ave}^T \rightarrow \min. ,$$

$$F_2 = \frac{1}{E_2} S_{mag} \rightarrow \min.$$

For this optimization problem, sampling has been performed by two methods of the method according to a comparative example and the method of the above embodiment. In the comparative example, learning data is expressed by a single-objective function instead of a linear weighted sum of a plurality of objective functions. Although a D-optimal design has not been implemented in the method of the above embodiment, other methods are the method of the above embodiment. As common settings, the number of initial points is 192, the number of times of iteration is 384, and the number of DA set recommendations is 1. The number of GA set recommendations is 3, the crossover probability is 0.9, the mutation probability is 0.1, threshold $\delta$ is 0.99, and the upper limit number of pieces of learning data is 400. In the comparative example, $\alpha = 0.5$ is fixed. In the method of the above embodiment, the magnitude of $\alpha$ is changed randomly between 0 and 1 at each time of iteration.

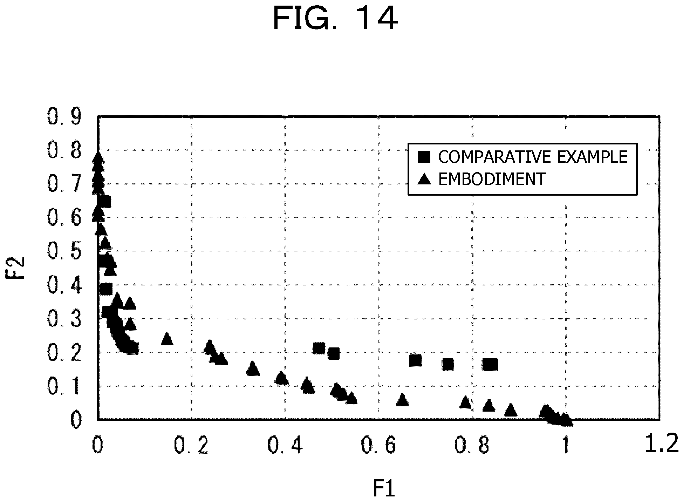

FIG. 14 is a diagram illustrating a result. In FIG. 14, Pareto solutions of a list of results obtained by a search are extracted and visualized. In the comparative example, the solutions of optimization results are concentrated in a part, and sparse Pareto solutions are obtained. By contrast, in the present embodiment, Pareto solutions spread, and solutions that are good in a multi-objective viewpoint are obtained. In the comparative example, the hyper volume is 0.788, and in the present embodiment, the hyper volume is 0.860. As described above, a better solution is obtained by the method of the above embodiment.

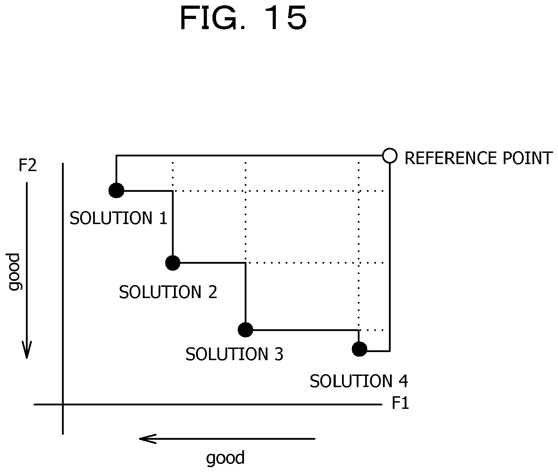

Hyper volume (HV) will be described. FIG. 15 is a diagram for describing HV. HV is a performance indicator of Pareto solutions. For example, HV represents an area or volume of a region formed by a certain reference point and a solution set obtained by an algorithm in an objective function space. As an example, the reference point is (0, 0), and a value obtained by normalizing each objective function may be used. In a case where the number of objective functions is two, the area illustrated in FIG. 15 is HV. As this HV is larger, the solutions spread, and thus it may be determined that a good result is obtained.

Although a D-optimal design is not implemented in the simulation for the method of the above embodiment, since initial points may be generated in a wide range in an analysis space by implementing a D-optimal design, Pareto solutions further spread.

In the above example, the number of DA set recommendations is an example of a first set number, a DA recommended point is an example of a first recommended point, the number of GA set recommendations is an example of a second set number, and a GA recommended point is an example of a second recommended point. The FMDA execution unit 40 and the GA execution unit are examples of an execution unit that executes processing of expressing each piece of learning data of a learning data group as an objective variable obtained by a linear weighted sum of a plurality of objective functions, and changing a weight of the linear weighted sum every time operation processing is executed. The initial point generation unit 20 is an example of an initial point generation unit that searches for matrix X satisfying a predetermined condition by repeating processing of randomly creating matrix X in which the number of initial points and a variable are expressed by the value of 0 or 1 and calculating $D = |X^TX|$ for matrix X, and generates an initial point of each piece of learning data of a learning data group using each value expressed by the searched matrix X. The learning data update unit 60 is an example of an update unit that updates a learning data group according to the evaluation value of each piece of learning data when the number of pieces of learning data in the learning data group exceeds an upper limit.

Although the embodiment of the present disclosure has been described in detail above, the present disclosure is not limited to such particular embodiment and may be variously modified and changed within the scope of the gist of the present disclosure described in claims.

**Claims**

1. An operation program for causing a computer to execute a process of,

in a case where operation processing is repeatedly executed, the operation processing including creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data,

expressing each piece of learning data of the learning data group as an objective variable obtained by a linear weighted sum of a plurality of objective functions, and changing a weight of the linear weighted sum every time the operation processing is executed.

2. The operation program according to claim 1, wherein

the computer is caused to execute a process of
searching for matrix X that satisfies a predetermined condition by repeating a process of randomly creating matrix X in which a number of initial points and a variable are expressed by a value of 0 or 1 and calculating $D = |X^TX|$ for matrix X, and setting each value expressed by searched matrix X as an initial point of each piece of learning data of the learning data group.

3. The operation program according to claim 1, wherein
when the genetic algorithm is applied to the learning data group, all pieces of learning data included in the learning data group are targets.

4. The operation program according to claim 1, wherein

the computer is caused to execute a process of
determining the first set number and the second set number according to an accuracy of the Ising model.

5. The operation program according to claim 4, wherein

the computer is caused to execute a process of
searching for the second recommended points by increasing the second set number without searching for the first recommended points when an accuracy of the Ising model is less than a threshold.

6. The operation program according to claim 4, wherein

the computer is caused to execute a process of
searching for the second recommended points by setting a sum of the first set number and the second set number to the second set number, without searching for the first recommended points, when an accuracy of the Ising model is less than a threshold.

7. The operation program according to claim 4, wherein

the computer is caused to execute a process of
searching for the first recommended points and the second recommended points without changing the first set number and the second set number when an accuracy of the Ising model is equal to or more than a threshold.

8. The operation program according to claim 1, wherein

an upper limit is provided for a number of pieces of the learning data in the learning data group, and
the computer is caused to execute a process of
updating the learning data group according to an evaluation value of each piece of the learning data when a number of pieces of the learning data in the learning data group exceeds the upper limit.

9. The operation program according to claim 8, wherein

the computer is caused to execute a process of
deleting other pieces of the learning data while leaving the upper limit number of pieces of the learning data in the learning data group in descending order of evaluation value when a number of pieces of the learning data in the learning data group exceeds the upper limit.

10. An operation method comprising:
    in a case where operation processing is repeatedly executed which includes creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data, expressing each piece of learning data of the learning data group as an objective variable obtained by a linear weighted sum of a plurality of objective functions, and changing a weight of the linear weighted sum every time the operation processing is executed.

11. The operation method according to claim 10, further comprising:
    searching for matrix X that satisfies a predetermined condition by repeating a process of randomly creating matrix X in which a number of initial points and a variable are expressed by a value of 0 or 1 and calculating $D = |X^TX|$ for matrix X, and setting each value expressed by searched matrix X as an initial point of each piece of learning data of the learning data group.

12. The operation method according to claim 10, wherein
    when the genetic algorithm is applied to the learning data group, all pieces of learning data included in the learning data group are targets.

13. The operation method according to claim 10, further comprising:
    determining the first set number and the second set number according to an accuracy of the Ising model.

14. The operation method according to claim 13, further comprising:
    searching for the second recommended points by increasing the second set number without searching for the first recommended points when an accuracy of the Ising model is less than a threshold.

15. An information processing apparatus comprising:,
    an execution unit configured to:
    in a case where an operation processing is repeatedly executed which includes creating an Ising model based on a learning data group, searching for a first set number of first recommended points for the Ising model, searching for a second set number of second recommended points for the learning data group by a genetic algorithm, and adding the first recommended points and first evaluation values of the first recommended points and the second recommended points and second evaluation values of the second recommended points to the learning data group as learning data, express each piece of learning data of the learning data group as an objective variable obtained by a linear weighted sum of a plurality of objective functions, and change a weight of the linear weighted sum every time the operation processing is executed.

# FIG. 1

# FIG. 2

$$x_j^{(1)}(=x_j)$$

| | | Feature vector x | | | | Target y |
|---|---|---|---|---|---|---|
| | User | Movie | Other Movies rated | Time | Last Movies rated | |
| | A B C ⋯ | TI NH SW ST ⋯ | TI NH SW ST ⋯ | 12 | TI NH SW ST ⋯ | |
| $x^{(1)}$ | 1 0 0 ⋯ | 1 0 0 0 ⋯ | 0.3 0.3 0.3 0 ⋯ | 13 | 0 0 0 (0) ⋯ | 5 $y^{(1)}$ |
| $x^{(2)}$ | 1 0 0 ⋯ | 0 1 0 0 ⋯ | 0.3 0.3 0.3 0 ⋯ | 14 | 1 0 0 0 ⋯ | 3 $y^{(2)}$ |
| $x^{(3)}$ | 1 0 0 ⋯ | 0 0 1 0 ⋯ | 0.3 0.3 0.3 0 ⋯ | 16 | 0 1 0 0 ⋯ | 1 $y^{(2)}$ |
| $x^{(4)}$ | 0 1 0 ⋯ | 0 0 1 0 ⋯ | 0 0 0.5 0.5 ⋯ | 5 | 1 0 0 0 ⋯ | 4 $y^{(3)}$ |
| $x^{(5)}$ | 0 1 0 ⋯ | 0 0 0 1 ⋯ | 0 0 0.5 0.5 ⋯ | 8 | 0 0 1 0 ⋯ | 5 $y^{(4)}$ |
| $x^{(6)}$ | 0 0 1 ⋯ | 1 0 0 0 ⋯ | 0.5 0 0.5 0 ⋯ | 9 | 0 0 0 0 ⋯ | 1 $y^{(5)}$ |
| $x^{(7)}$ | 0 0 1 ⋯ | 0 0 0 0 ⋯ | 0.3 0.3 0.3 0 ⋯ | 12 | 1 0 0 0 ⋯ | 5 $y^{(6)}$ |

n-DIMENSIONAL VECTORS

# FIG. 3

```
          ( START )
              │
              ▼
┌─────────────────────────────────┐
│   GENERATE INITIAL POINTS        │ ～ S1
└─────────────────────────────────┘
              │
              ▼
┌─────────────────────────────────┐
│ EVALUATE INITIAL POINT BY USING  │ ～ S2
│            SOLVER                │
└─────────────────────────────────┘
              │
              ▼
┌─────────────────────────────────┐
│   CREATE MODEL IN QUBO FORMAT    │ ～ S3
└─────────────────────────────────┘
              │
              ▼
┌─────────────────────────────────┐
│ GENERATE DA RECOMMENDED POINT BY │ ～ S4
│ QUBO OPTIMIZATION BY DA          │
└─────────────────────────────────┘
              │
              ▼
┌─────────────────────────────────┐
│ EVALUATE RECOMMENDED POINT BY    │ ～ S5
│         USING SOLVER             │
└─────────────────────────────────┘
              │
              ▼
┌─────────────────────────────────┐
│ ADD EVALUATION RESULT TO         │ ～ S6
│      LEARNING DATA               │
└─────────────────────────────────┘
              │
              ▼
NO  ⟨ HAS NUMBER OF TIMES OF ITERATION ⟩ ～ S7
    ⟨  REACHED UPPER LIMIT?           ⟩
              │ YES
              ▼
          ( END )
```

## FIG. 4A

100

STORING UNIT ~10

INITIAL POINT GENERATION UNIT ~20

EVALUATION UNIT ~30

FMDA EXECUTION UNIT ~40

GA EXECUTION UNIT ~50

LEARNING DATA UPDATE UNIT ~60

OUTPUT UNIT ~70

## FIG. 4B

101

CPU

102

RAM

STORAGE DEVICE
103

INPUT DEVICE
104

DISPLAY DEVICE
105

# FIG. 5

```
                    ┌─────────────┐
                    │    START    │
                    └──────┬──────┘
                           │
                           ▼
      ┌────────────────────────────────────────┐
      │        GENERATE INITIAL POINTS          │ ～ S11
      └────────────────────┬───────────────────┘
                           │
                           ▼
      ┌────────────────────────────────────────┐
      │   EVALUATE INITIAL POINT BY USING SOLVER │ ～ S12
      └────────────────────┬───────────────────┘
                           │
                           ▼
      ┌────────────────────────────────────────┐
      │ GENERATE DA RECOMMENDED POINT AND GA     │ ～ S13
      │        RECOMMENDED POINT                 │
      └────────────────────┬───────────────────┘
                           │
                           ▼
      ┌────────────────────────────────────────┐
      │     EVALUATE RECOMMENDED POINT BY USING  │ ～ S14
      │                 SOLVER                   │
      └────────────────────┬───────────────────┘
                           │
                           ▼
      ┌────────────────────────────────────────┐
      │  ADD EVALUATION RESULT TO LEARNING DATA  │ ～ S15
      └────────────────────┬───────────────────┘
                           │
        NO                 ▼
   ┌───────◁────────────────────────────────────────▷ ～ S16
   │        HAS NUMBER OF TIMES OF ITERATION
   │          REACHED UPPER LIMIT?
   │                       │ YES
   │                       ▼
   │              ┌─────────────┐
   │              │     END     │
   │              └─────────────┘
```

# FIG. 6

START

↓

RANDOMLY CREATE MATRIX X HAVING VALUE OF 0 OR 1 FOR (INITIAL POINT, NUMBER OF VARIABLES) — S21

↓

CALCULATE DETERMINANT $D = |X^T X|$ SERVING AS D OPTIMAL INDICATOR — S22

↓

SAVE CURRENT D AND X AS $D_{best}$ AND $X_{best}$, RESPECTIVELY — S23

↓

RANDOMLY CREATE MATRIX X HAVING VALUE OF 0 OR 1 FOR (INITIAL POINT, NUMBER OF VARIABLES) — S24

↓

CALCULATE DETERMINANT $D = |X^T X|$ SERVING AS D OPTIMAL INDICATOR — S25

↓

$D > D_{best}$? — S26 → NO

↓ YES

SAVE CURRENT D AND X AS $D_{best}$ AND $X_{best}$, RESPECTIVELY — S27

↓

HAS NUMBER OF TIMES OF SEARCHING REACHED UPPER LIMIT? — S28 → NO

↓ YES

SET $X_{best}$ AS INITIAL POINT — S29

↓

END

# FIG. 7

| No. | x1 | x2 | x3 | x4 | x5 | x6 | x7 | x8 | x9 | x10 | TOTAL |
|---|---|---|---|---|---|---|---|---|---|---|---|
| 1 | 1 | 1 | 0 | 1 | 0 | 1 | 1 | 0 | 1 | 1 | 7 |
| 2 | 0 | 1 | 1 | 0 | 0 | 1 | 0 | 0 | 0 | 0 | 3 |
| 3 | 0 | 1 | 0 | 0 | 1 | 1 | 0 | 0 | 1 | 0 | 4 |
| 4 | 0 | 1 | 0 | 0 | 0 | 1 | 1 | 0 | 1 | 1 | 5 |
| 5 | 1 | 1 | 1 | 0 | 1 | 0 | 0 | 0 | 0 | 1 | 5 |
| 6 | 0 | 1 | 1 | 1 | 0 | 1 | 0 | 1 | 1 | 0 | 6 |
| 7 | 1 | 0 | 0 | 1 | 0 | 0 | 0 | 1 | 1 | 0 | 4 |
| 8 | 0 | 0 | 1 | 0 | 1 | 1 | 0 | 1 | 1 | 0 | 5 |
| 9 | 1 | 0 | 0 | 0 | 0 | 0 | 1 | 0 | 1 | 0 | 3 |
| 10 | 0 | 0 | 0 | 0 | 0 | 0 | 1 | 1 | 0 | 1 | 3 |
| TOTAL | 4 | 6 | 4 | 3 | 3 | 6 | 4 | 4 | 7 | 4 | |

| No. | x1 | x2 | x3 | x4 | x5 | x6 | x7 | x8 | x9 | x10 | TOTAL |
|---|---|---|---|---|---|---|---|---|---|---|---|
| 1 | 1 | 0 | 0 | 1 | 1 | 0 | 0 | 1 | 0 | 0 | 4 |
| 2 | 1 | 0 | 0 | 1 | 0 | 1 | 0 | 1 | 1 | 1 | 6 |
| 3 | 0 | 0 | 1 | 1 | 1 | 1 | 1 | 0 | 1 | 1 | 7 |
| 4 | 0 | 1 | 1 | 0 | 0 | 1 | 0 | 0 | 1 | 0 | 4 |
| 5 | 0 | 1 | 1 | 1 | 1 | 0 | 0 | 0 | 0 | 1 | 5 |
| 6 | 0 | 0 | 1 | 0 | 0 | 0 | 1 | 1 | 0 | 1 | 5 |
| 7 | 0 | 1 | 0 | 0 | 1 | 1 | 1 | 1 | 0 | 0 | 5 |
| 8 | 0 | 1 | 0 | 1 | 0 | 0 | 0 | 1 | 1 | 1 | 5 |
| 9 | 1 | 1 | 0 | 0 | 1 | 1 | 0 | 1 | 1 | 0 | 6 |
| 10 | 1 | 1 | 1 | 1 | 0 | 0 | 1 | 0 | 1 | 0 | 6 |
| TOTAL | 5 | 6 | 5 | 6 | 5 | 5 | 4 | 6 | 6 | 5 | |

## FIG. 8

```
                              ( START )
                                  │
                                  ▼                        ┌ S31
                    ┌──────────────────────────────┐
                    │ DETERMINE MAGNITUDE OF WEIGHT OF │
                    │      OBJECTIVE FUNCTION         │
                    └──────────────────────────────┘
                                  │
                                  ▼                        ┌ S32
                    ┌──────────────────────────────┐
                    │ CALCULATE OBJECTIVE FUNCTION VALUE BY │
                    │      LINEAR WEIGHTED SUM        │
                    └──────────────────────────────┘
                                  │
                     YES          ▼                        ┌ S33
        ┌──────────────◇ DO ALL PIECES OF DATA EXCEED UPPER LIMIT ◇
        │              ◇ NUMBER OF PIECES OF LEARNING DATA?       ◇
        │                              │ NO
        ▼                              │
┌──────────────────────┐             │
│ SELECT UPPER LIMIT NUMBER OF PIECES │ ~ S34
│ OF LEARNING DATA IN DESCENDING      │
│ ORDER OF OBJECTIVE FUNCTION VALUE   │
└──────────────────────┘             │
        │                            ▼                     ┌ S35
        │              ┌──────────────────────────────┐
        │              │ SET ALL PIECES OF DATA AS LEARNING DATA │
        │              └──────────────────────────────┘
        │                            │
        └───────────────────────────┤
                                     ▼                      ┌ S36
                    ┌──────────────────────────────┐
                    │ CREATE QUBO FROM LEARNING DATA BY USING FM │
                    └──────────────────────────────┘
                                     │
                                     ▼                      ┌ S37
                    ┌──────────────────────────────┐
                    │ CALCULATE DETERMINATION COEFFICIENT $R^2$ OF │
                    │      FM MODEL FOR LEARNING DATA  │
                    └──────────────────────────────┘
                                     │
                 NO                  ▼                      ┌ S38
        ┌──────────────◇           $R^2 > \delta_{R^2}$?           ◇
        │                              │ YES
        ▼                              │
┌──────────────────────┐             │
│ SET NUMBER OF GA RECOMMENDATIONS    │ ~ S41
│ TO BE (NUMBER OF GA SET             │
│ RECOMMENDATIONS + NUMBER OF DA SET  │
│ RECOMMENDATIONS)                    │
└──────────────────────┘             ▼                      ┌ S39
        │              ┌──────────────────────────────┐
        │              │ GENERATE RECOMMENDED POINT BY QUBO │
        │              │      OPTIMIZATION BY DA         │
        │              └──────────────────────────────┘
        │                            │
        │                            ▼                      ┌ S40
        │              ┌──────────────────────────────┐
        │              │ SET NUMBER OF GA RECOMMENDATIONS TO BE │
        │              │   NUMBER OF GA SET RECOMMENDATIONS │
        │              └──────────────────────────────┘
        │                            │
        └───────────────────────────┤
                                     ▼                      ┌ S42
                    ┌──────────────────────────────┐
                    │ SELECT PARENT INDIVIDUAL FROM ALL PIECES OF │
                    │ DATA BY USING MULTI-OBJECTIVE GA METHOD │
                    └──────────────────────────────┘
                                     │
                                     ▼                      ┌ S43
                    ┌──────────────────────────────┐
                    │ GENERATE AS MANY CHILD INDIVIDUALS (GA RECOMMENDED │
                    │ POINTS) AS NUMBER OF GA RECOMMENDATIONS FROM │
                    │ PARENT INDIVIDUAL BY CROSSOVER AND MUTATION │
                    └──────────────────────────────┘
                                     │
                                     ▼
                                 ( END )
```

# FIG. 9A

# FIG. 9B

# FIG. 10A

PARENT A | 1 | 0 | 0 | 1 | 0 | 1 | 1 | 0 |  CHILD A | 1 | 0 | 0 | 1 | 1 | 1 | 1 | 0 |

→

PARENT B | 0 | 1 | 0 | 1 | 1 | 1 | 0 | 1 |  CHILD B | 0 | 1 | 0 | 1 | 0 | 1 | 0 | 1 |

# FIG. 10B

| 1 | 0 | 0 | 1 | 0 | 1 | 1 | 0 |

↓

| 1 | 0 | 0 | 0 | 0 | 1 | 1 | 0 |

## FIG. 11A

COIL

MAGNETIC BODY

TARGET REGION

## FIG. 11B

COIL

ARRANGE 96 BASES

## FIG. 11C

MAGNETIC FLUX LINE

TARGET REGION

# FIG. 12

POSITIVE
ARRANGEMENT

| s1 | s2 | s3 | s4 | ... | s93 | s94 | s95 | s96 |
|---|---|---|---|---|---|---|---|---|
| 0 | 0 | 1 | 0 | ... | 1 | 1 | 1 | 1 |

+

NEGATIVE
ARRANGEMENT

| z1 | z2 | z3 | z4 | ... | z93 | z94 | z95 | z96 |
|---|---|---|---|---|---|---|---|---|
| 0 | 0 | 0 | 0 | ... | 1 | 0 | 1 | 0 |

WEIGHT OF
GAUSSIAN BASIS
FUNCTION

| w1 | w2 | w3 | w4 | ... | w93 | w94 | w95 | w96 |
|---|---|---|---|---|---|---|---|---|
| 0 | 0 | 1 | 0 | ... | 1 | 0 | 1 | 0 |

# FIG. 13

DISTRIBUTION OF SHAPE FUNCTION y

# FIG. 14

# FIG. 15

Europäisches
Patentamt
European
Patent Office
Office européen
des brevets

# EUROPEAN SEARCH REPORT

**Application Number**

EP 24 17 8414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TADAYOSHI MATSUMORI ET AL: "Application of QUBO solver using black-box optimization to structural design for resonance avoidance", ARXIV.ORG, CORNELL UNIVERSITY LIBRARY, 201 OLIN LIBRARY CORNELL UNIVERSITY ITHACA, NY 14853, 20 July 2022 (2022-07-20), XP091275288, DOI: 10.1038/S41598-022-16149-8 * abstract; Sections 1-4; figure 1 * | 1-15 | INV. G06N5/01 G06N3/126 ADD. G06N10/60 |
| A | WILSON BLAKE A ET AL: "Machine learning framework for quantum sampling of highly constrained, continuous optimization problems", APPLIED PHYSICS REVIEWS, AMERICAN INSTITUTE OF PHYSICS, 2 HUNTINGTON QUADRANGLE, MELVILLE, NY 11747, vol. 8, no. 4, 29 December 2021 (2021-12-29), XP012262363, DOI: 10.1063/5.0060481 [retrieved on 2021-12-29] * abstract; Sections I-IV; Appendix A-F; figures 1-2 * | 1-15 | |
| E | WO 2024/180951 A1 (FUJITSU LTD [JP]) 6 September 2024 (2024-09-06) * the whole document * | 1-15 | |

**TECHNICAL FIELDS SEARCHED (IPC)**

G06N

-/--

The present search report has been drawn up for all claims

| Place of search | Date of completion of the search | Examiner |
|---|---|---|
| The Hague | 12 November 2024 | Klasen, TJ |

EPO FORM 1503 03.82 (P04C01)

Europäisches
Patentamt
European
Patent Office
Office européen
des brevets

## EUROPEAN SEARCH REPORT

Application Number

EP 24 17 8414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KITAI KOKI ET AL: "Designing metamaterials with quantum annealing and factorization machines", PHYSICAL REVIEW RESEARCH, [Online] vol. 2, no. 1, 16 March 2020 (2020-03-16), XP055848128, DOI: 10.1103/PhysRevResearch.2.013319 Retrieved from the Internet: URL:https://journals.aps.org/prresearch/pdf/10.1103/PhysRevResearch.2.013319> [retrieved on 2024-11-11] * page 1 - page 7; figures 1-2 * | 1-15 | |
| A | EP 4 009 200 A1 (FUJITSU LTD [JP]) 8 June 2022 (2022-06-08) * paragraph [0022] - paragraph [0316]; figures 2,7,8,10 * | 1-15 | |

TECHNICAL FIELDS
SEARCHED      (IPC)

The present search report has been drawn up for all claims

| Place of search | Date of completion of the search | Examiner |
|---|---|---|
| The Hague | 12 November 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8414

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | Publication date | Patent family member(s) | | Publication date |
|---|---|---|---|---|
| WO 2024180951 A1 | 06-09-2024 | JP | 2024122380 A | 09-09-2024 |
| | | WO | 2024180951 A1 | 06-09-2024 |
| EP 4009200 A1 | 08-06-2022 | CN | 114595549 A | 07-06-2022 |
| | | EP | 4009200 A1 | 08-06-2022 |
| | | JP | 2022090249 A | 17-06-2022 |
| | | US | 2022180210 A1 | 09-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022190752 A
- JP 2021033544 A

- JP 2022045870 A